# EUROPEAN PATENT SPECIFICATION

(11) **EP 3 255 273 B1**
(45) Date of publication and mention of the grant of the patent: **01.08.2018**
(21) Application number: 16174003.0
(22) Date of filing: 10.06.2016
(51) Int. Cl.: F02M 35/104, F02M 35/10, F02M 26/18, F02M 35/112

(54) **INTAKE MANIFOLD UNIT FOR AN INTERNAL COMBUSTION ENGINE**
EINLASSKRÜMMEREINHEIT FÜR VERBRENNUNGSMOTOREN
UNITÉ DE COLLECTEUR D'ADMISSION POUR MOTEUR À COMBUSTION INTERNE

(43) Date of publication of application: 13.12.2017
(73) Proprietor: FCA Italy S.p.A., 10135 Torino (IT)
(72) Inventor: SPINELLI, Gerardo, I-10135 Torino (IT)
(74) Representative: Notaro, Giancarlo

(56) References cited:
- EP-A1- 2 706 210
- DE-A1- 10 126 875
- DE-T2- 69 715 253
- DE-U1-202009 009 441
- KR-A- 20120 026 757
- US-A- 5 704 326
- US-A- 6 098 586
- US-A1- 2006 075 997
- US-A1- 2013 061 825

## Description

### Field of the invention

The present invention relates to an intake manifold unit for an internal combustion engine of a motor-vehicle, configured for receiving and mixing a flow of recirculated exhaust gases and a flow of intake air, wherein said manifold unit comprises a manifold hollow body defining a chamber in communication with:
- at least one conduit for introducing said flow of recirculated exhaust gases within said chamber of the manifold,
- at least one inlet for the intake air of said internal combustion engine,
- a plurality of outlets in communication with the cylinders of the internal combustion engine for directing a mixed flow of air and recirculated exhaust gases towards the cylinders of the internal combustion engine,
- said unit further comprising a baffle extending within said chamber and which defines a first chamber portion in communication with said inlet and with said conduit and a second chamber portion in communication with said plurality of outlets.

### Prior art

Intake manifolds for internal combustion engine of the type indicated above are already known, in which the manifold receives in its interior both intake air of the engine and a flow of recirculated exhaust gases (EGR) within the chamber of the manifold. Manifolds which comprise in their interior a baffle which defines two different chamber portions inside the hollow body of the manifold are also already known, for making uniform the mixing of air and recirculated exhaust gases before reaching the engine cylinders (see for example the document US 8919315 B2).

Intake manifolds of that type made until now have the drawback of the butterfly valve which regulates the flow of air which enters in the manifold subject to carbon deposits (so called "EGR soot") which are present in the flow of exhaust gases recirculated in the manifold, with consequent reduction of efficiency and malfunction of the valve which can cause the replacement of the valve.

An intake manifold unit according to the preamble of claim 1 is known from US 2013/061825 A1. A similar arrangement is known from US 5 704 326 A.

Solutions for avoiding the above indicated drawback are known from DE 697 15 253 T2 (corresponding to WO 9826173 A1) or DE 20 2009 009441 U1, but involve complicated, heavy and costly arrangements

### Object of the invention

The object which is the basis of the present invention is to overcome the drawback mentioned above which occurs with known solutions and also to provide an intake manifold unit which is simple to produce and with low cost of production.

A further object of the present invention is to provide an intake manifold which remains efficient in all its functions during the entire life of the engine which is associated.

### Summary of the invention

In view of achieving the above object, the invention has for subject an intake manifold unit according to claim1.

Thanks to these features, the exhaust gases which are recirculated into the intake manifold pass through the intake manifold without soiling the valve located on the side of the manifold air inlet which regulates the flow of air which enters into the manifold, in such a way as to reduce or completely eliminate the risk of valve malfunctions during the entire life of the engine.

This solution ensures that the valve maintains a constant efficiency for the entire life of the engine.

Moreover, the flows of air and recirculated exhaust gases which enter into the manifold are homogeneously mixed, in such a way that the mixed flow directed from the manifold outlets towards the cylinders of the engine does not have any not well mixed portions.

Also, thanks to these features of claim 1, the manifold unit according the present invention is simple and with low production costs.

### Detailed description of a preferred embodiment

Further features and advantages of the invention will become apparent from the following description with reference to the annexed figures, given purely by way of non limiting example, in which:
- figure 1 is a perspective view of a preferred embodiment of the intake manifold unit according the present invention, and
- figure 2 shows an enlarged scale view of a detail of the manifold unit shown in figure 1.

With reference to the annexed drawings, the reference number 1 indicates a preferred embodiment of an intake manifold unit for an internal combustion engine for a motor-vehicle according the present invention.

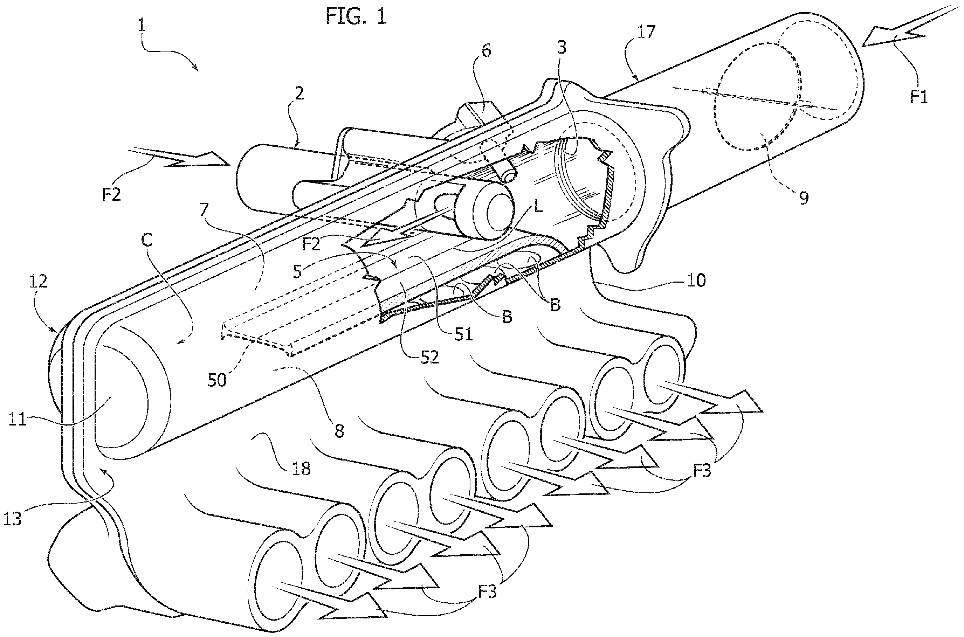

The manifold unit 1 shown in the perspective view of figure 1 has a hollow body with elongated conformation which defines a longitudinal direction of the manifold. The hollow body of the intake manifold 1 is constituted of plastic material and is formed by two half-shells 12, 13 welded one to each other. In the present description and in the annexed drawings the constructive details regarding the plastic body of the manifold are not included, considering that such details can be provided with any known technique and also considering that the elimination of such details from the drawings renders the latter easier to understand.

The hollow body of the manifold 1 defines a chamber C which is configured for receiving in its interior and mixing both a flow of recirculated exhaust gases EGR and a flow of intake air. As a consequence, the chamber C of the manifold 1 is in communication with a conduit 2 for introducing the flow of recirculated exhaust gases within the chamber C and is also in communication with an inlet 3 for the intake air of the internal combustion engine.

Again with reference to the perspective view of figure 1, the inlet 3 is provided on an end wall 10 of the manifold 1, whereas a downstream end of the conduit 2 which let flow the EGR gases in the chamber C is mounted adjacent to a lateral wall 15 of the manifold 1. The inlet 3 formed on the end wall 10 is coupled with a downstream end of a conduit 17 which let flow the intake air within the manifold 1. According to prior art, the conduit 17 is provided with a butterfly valve 9 which controls the flow of air which passes inside the conduit 17 and enters in the inlet 3 and so inside the chamber C. The chamber C of the manifold is also in communication with a plurality of outlets 4 provided on a lower portion of a lateral wall 18 which is opposite to the lateral wall 10. The outlets 4 are in communication with the cylinders of the internal combustion engine and direct the mixed flow of air and recirculated exhaust gases towards the cylinders of the engine.

According to an important feature of the manifold unit 1 of the present invention, inside the manifold body 1 is provided a baffle 5 which extends inside the chamber C in a parallel way to the longitudinal direction of the manifold. The baffle 5 divides the chamber C of the manifold 1 defining a first chamber portion 7 in communication with the inlet 3 for the air and with the conduit 2 for the exhaust gases, and a second chamber portion 8 which communicates with the plurality of the outlets 4 towards the cylinders of the engine. The baffle 5 has a planar wall which extends inside the body of the manifold 1 starting from the end wall 10 of the manifold unit 1 where is formed the inlet 3 for the intake air, up to a free end 50 of the baffle 5 located with distance from a second end wall 11 of the manifold unit 1 which is opposite to the first end wall 10. The end of the baffle 5 opposite to the free end 50 is adjacent to the end wall 10 and has a rounded edge for fitting the inlet 3 in such a way as to avoid that part of the flow of air which enters in the first chamber portion 7 passes in the chamber 8 without passing through the entire first chamber portion 7 in a parallel direction of the baffle 5. Considering that the body of the manifold is formed by the two half-shells 12, 13 welded one to each other, the planar wall of the baffle 5 is formed by two half-walls 51, 52 belonging respectively to said half-shells 12, 13 and having a line L of mutual junction along the longitudinal median axis of the baffle 5.

Thanks to the embodiment indicated above of the baffle 5, the flow of air and the flow of recirculated gases are mixed in an uniform way in the chamber portion 7 before reaching the chamber portion 8 and the outlets 4, in such a way as to avoid malfunctions of the engine. In a variant not illustrated the planar wall of the baffle 5 has a plurality of holes configured in such a way as to not prejudice in any way a sufficient mixing of air and exhaust gases recirculated.

The manifold 1 comprises also a sensor of temperature and/or a sensor of pressure indicated in the drawings with the reference 6. The sensor 6 is positioned within the first chamber portion 7, upstream of a terminal portion 20 of the conduit 2 of the recirculated exhaust gases with reference to the direction of the intake air within the first chamber portion 7. The sensor 6 has the function of measuring the temperature and/or the pressure of the flow passing inside the manifold, in such a way as the electronic control unit can control the valve 9 and a valve EGR (here not illustrated) according different parameters of the engine (such as the engine torque) on the basis of such values of temperature and/or pressure.

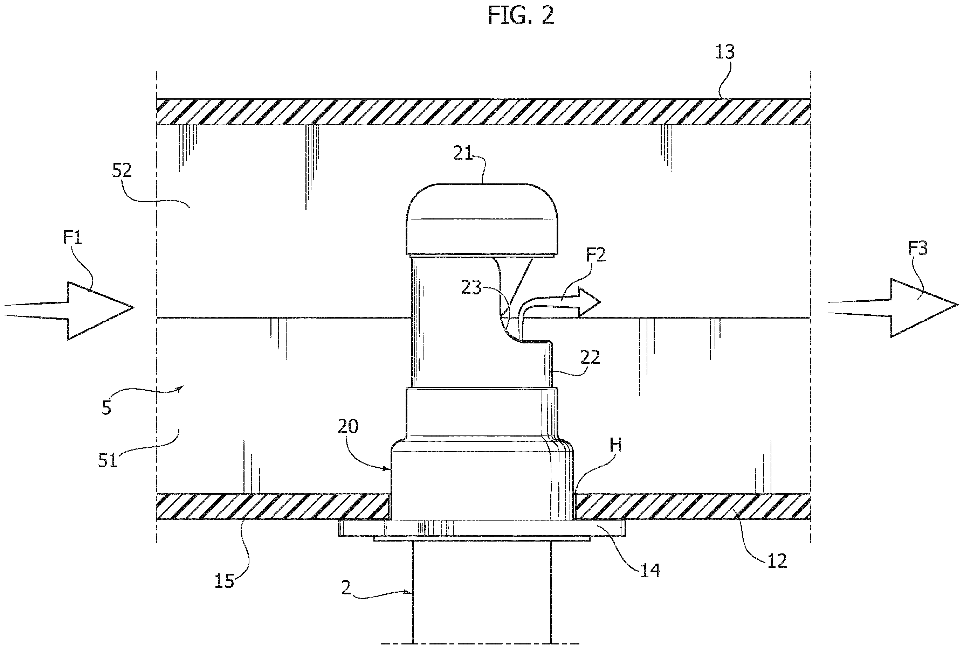

Figure 2 shows an enlarged scale view of the terminal portion 20 of the conduit 2 of the recirculated exhaust gases. The terminal portion 20 is inserted through a hole H of a lateral wall 15 of the manifold body 1 and is rigidly connected to a flange 14 screwed to the lateral wall 15 of the manifold body 1.

According to a fundamental feature of the invention, the conduit 2 of the recirculated exhaust gases has the aforementioned terminal end portion 20 internal to the first chamber portion 7 of the manifold. The terminal end portion 20 is transversally directed to the direction of the flow of the intake air within the first chamber portion 7 and has a closed end wall 21 and a lateral wall 22. The lateral wall 22 has an opening 23 provided on the opposite side to the air inlet 3 within the chamber C of the manifold 1. As a consequence, the opening 23 directs the flow of exhaust gases recirculated EGR within the first chamber portion 7 in the same direction of the flow of intake air which enters in the first chamber portion 7.

Thanks to the configuration described above of the terminal end 20 and the opening 23 and thanks to the valve 9 and the sensor 6 which are located upstream to the terminal end portion 20, the flow of exhaust gas EGR inside the chamber C of the manifold 1 is provided in such a way as the butterfly valve 9 and the sensor 6 are not soiled by the carbon deposits which are present inside the EGR gases. In this way, the risk of malfunctions of the valve 9 and the sensor 6 caused by the carbon deposits which can remain on these components is reduced or completely cancelled.

Such a configuration, results particularly advantageously most of all in the case of modern engines which need a high quantity of exhaust gasrecirculated inside the manifold in such a way as to limit as much as possible emissions of the engines. Furthermore, the butterfly valve 9 maintains efficiency in the entire operative life of the engine without causing its replacement caused by malfunctions caused by the carbon deposits of the EGR gases.

In the following the functioning of the intake manifold unit 1 according the present invention is described.

In the figures of the annexed drawings the arrows F1, F2, F3 indicates respectively the flow of intake air of the engine, the flow of the recirculated exhaust gases EGR, and the mixed flow of recirculated exhaust gases and intake air.

During the normal functioning of the internal combustion engine to which is associated the manifold unit 1 according the present invention, a part of the flow of exhaust gases is recirculated from the exhaust line to the intake of the engine. The flow of recirculated exhaust gases passes within the conduit 2.

The flow of intake air F1 enters into conduit C, and the butterfly valve 9 regulates the flow of intake air F1 which enters in the conduit 17 and so in the hollow body of the manifold 1. The flow of air F1 enters in the chamber portion 7 defined by the baffle 5 and flows in direction of the end wall 11 of the manifold 1. The flow of recirculated exhaust gases F2 goes out from the terminal end 20 of the conduit 2 through the opening 23. As previously said, the opening 23 is configured in such a way as the flow of exhaust gases F2 doesn't flow towards the sensor 6 and the butterfly valve 9, but passes through the chamber portion 7 in a parallel way to the baffle 5 in the same direction of the flow of intake air F1. The flow of air F1 and the flow of recirculated exhaust gases F2 are mixed within the first chamber portion 7 and continue their path in the second chamber portion 8. The mixed flow F3 passes through a plurality of openings B of circular shape provided below the baffle 5. In the end, the mixed flow F3 goes out from the plurality of outlets 4 in order to reach the cylinders of the internal combustion engine to which is associated the manifold unit 1.

As result evident from the previous description, the manifold unit 1 according the invention combines simplicity and production economy with features of low weight and constant efficiency during the time.

Naturally, while the principle of the invention remains the same, the details of construction and the embodiments may widely vary with respect to what has been described and illustrated purely by way of example, without departing from the scope of the present invention.

## Claims

1. Intake manifold unit (1) for an internal combustion engine of a motor-vehicle, configured for receiving and mixing a flow of recirculated exhaust gases and a flow of intake air, wherein said manifold unit (1) comprises a manifold hollow body defining a chamber (C) in communication with:
- at least one conduit (2) for introducing said flow of recirculated exhaust gases within said chamber (C) of the manifold (1),
- at least one inlet (3) for the intake air of said internal combustion engine,
- a valve (9) located on the side of the at least one inlet (3),
- a plurality of outlets (4) in communication with the cylinders of the internal combustion engine for directing a mixed flow of air and recirculated exhaust gases towards the cylinders of the internal combustion engine,
- said unit (1) further comprising a baffle (5) extending within said chamber (C) and which defines a first chamber portion (7) in communication with said inlet (3) and with said conduit (2) and a second chamber portion (8) in communication with said plurality of outlets (4),
- wherein said body has an elongated conformation defining a longitudinal direction of the manifold and said baffle (5) extends within said manifold body parallel to said longitudinal direction of said body, starting from an end wall (10) of the body where the inlet (3) for the intake air is formed, up to a free end (50) of the baffle (5) located at a distance from a second end wall (11) of said body which is opposite to the first end wall (10),
wherein said conduit (2) of the recirculated exhaust gases has a terminal end portion (20) which is internal to said first chamber portion (7) and which is directed transversally to the direction of the flow of intake air within said first chamber portion (7),
said intake manifold unit (1) being **characterized in that** said terminal portion (20) of the conduit (2) of the recirculated gases has a closed end wall (21) and a lateral wall (22) with at least one opening (23) on an opposite side with respect to the air inlet (3), for directing the flow of recirculated exhaust gases within said first chamber portion (7) in the same direction of the flow of intake air within said first chamber portion (7),
**in that** said body of the intake manifold is constituted of plastic material and is formed by two half-shells (12, 13) welded to each other,
**in that** said baffle (5) is a substantially planar wall formed by two half-walls (51, 52) belonging respectively to said half-shells (12, 13) and having a line of mutual junction (L) along a longitudinal median axis of the baffle (5),
**in that** said manifold unit (1) further comprises a temperature sensor and/or a pressure sensor (6) located within said first chamber portion (7) of said chamber (C), upstream to said terminal portion (20) of the conduit (2) of the recirculated exhaust gases, with reference to the direction of the flow of intake air.

2. Intake manifold unit (1) according claim 1, **characterized in that** said substantially planar wall of the baffle (5) has a plurality of holes.

3. Intake manifold unit (1) according claim 1, **characterized in that** said terminal portion (20) of the conduit (2) for the recirculated exhaust gases is inserted through a hole (H) of a lateral wall (15) of the manifold body and is rigidly connected to a flange (14) screwed to said lateral wall (15) of the manifold body.

## Patentansprüche

1. Einlasskrümmereinheit (1) für einen Verbrennungsmotor eines Motorfahrzeugs, der ausgebildet ist, einen rezirkulierten Abgasstrom und einen Einlassluftstrom aufzunehmen und zu mischen, wobei die Krümmereinheit (1) einen Krümmerhohlkörper aufweist, der eine Kammer (C) bildet, die in Verbindung steht mit:
- mindestens einer Leitung (2) zum Einführen des rezirkulierten Abgasstroms in die Kammer (C) der Krümmereinheit (1),
- mindestens einem Einlass (3) für die Einlassluft des Verbrennungsmotors,
- einem Ventil (9), das auf Seite des mindestens eines Einlasses (3) angeordnet ist,
- mehreren Auslässen (4), die mit den Zylindern des Verbrennungsmotors in Verbindung stehen, um einen gemischten Luft- und rezirkulierten Abgasstrom in Richtung der Zylinder des Verbrennungsmotors zu führen,
- wobei die Einheit (1) ferner eine Trennwand (5) aufweist, die sich in der Kammer (C) erstreckt und einen ersten Kammerbereich (7), der mit dem Einlass (3) und mit der Leitung (2) in Verbindung steht, und einen zweiten Kammerbereich (8) bildet, der mit den mehreren Auslässen (4) in Verbindung steht,
- wobei der Körper eine gestreckte Gestalt hat, die eine Längsrichtung der Krümmereinheit festlegt und wobei die Trennwand (5) sich in dem Krümmerkörper parallel zu der Längsrichtung des Körpers beginnend bei einer Stirnwand (10) des Körpers, an der der Einlass (3) für die Einlassluft ausgebildet ist, bis einem freien Ende (50) der Trennwand (5) erstreckt, das mit Abstand zu einer zweiten Stirnwand (11) des Körpers angeordnet ist, die sich gegenüberliegend zu der ersten Stirnwand (10) befindet,
wobei die Leitung (2) des rezirkulierten Abgases einen Anschlussendbereich (20) aufweist, der in dem ersten Kammerbereich (7) liegt und der quer zu der Richtung des Einlassluftstroms in dem ersten Kammerbereich (7) gerichtet ist,
wobei die Einlasskrümmereinheit (1) **dadurch gekennzeichnet ist, dass**
der Anschlussbereich (20) der Leitung (2) der rezirkulierten Gase eine geschlossene Stirnfläche (21) und eine laterale Wand (22) mit mindestens einer Öffnung (23) auf einer in Bezug auf den Lufteinlass (3) gegenüberliegenden Seite hat, um den rezirkulierten Abgasstrom in dem ersten Kammerbereich (7) in der Richtung des Einlassluftstroms innerhalb des ersten Kammerbereichs (7) zu führen,
der Körper der Einlasskrümmereinheit aus Kunststoffmaterial aufgebaut ist und durch zwei Halbschalen (12, 13), die miteinander verschweißt sind, gebildet ist,
die Trennwand (5) eine im Wesentlichen ebene Wand ist, die durch zwei Halbwände (51, 52) gebildet ist, die entsprechend zu den Halbschalen (12, 13) gehören und eine Verbindungslinie (L) entlang einer Längsmittelachse der Trennwand (5) haben,
die Krümmereinheit (1) ferner einen Temperatursensor und/oder einen Drucksensor (6) aufweist, der in dem ersten Kammerbereich (7) der Kammer (C) stromaufwärts von dem Anschlussbereich (20) der Leitung (2) der rezirkulierten Abgase in Bezug auf die Richtung des Einlassluftstroms angeordnet ist.

2. Einlasskrümmereinheit (1) nach Anspruch 1, **dadurch gekennzeichnet, dass** die im Wesentlichen ebene Wand der Trennwand (5) mehrere Bohrungen hat.

3. Einlasskrümmereinheit (1) nach Anspruch 1, **dadurch gekennzeichnet, dass** der Anschlussbereich (20) der Leitung (2) für die rezirkulierten Abgase durch eine Bohrung (H) einer lateralen Wand (15) des Krümmerkörpers eingeführt ist und starr mit einem Flansch (14) verbunden ist, der mit der lateralen Wand (15) des Krümmerkörpers verschraubt ist.

## Revendications

1. Unité de collecteur d'admission (1) pour un moteur à combustion interne d'un véhicule automobile, configurée pour recevoir et mélanger un flux de gaz d'échappement recirculés et un flux d'air d'admission, dans laquelle ladite unité de collecteur (1) comprend un corps creux de collecteur définissant une chambre (C) en communication avec :
- au moins un conduit (2) pour introduire ledit flux de gaz d'échappement recirculés dans ladite chambre (C) du collecteur (1),
- au moins une entrée (3) pour l'air d'admission dudit moteur à combustion interne,
- une soupape (9) située du côté de l'au moins une entrée (3),
- une pluralité de sorties (4) en communication avec les cylindres du moteur à combustion interne pour diriger un flux mixte d'air et de gaz d'échappement recirculés vers les cylindres du moteur à combustion interne,
- ladite unité (1) comprenant en outre un déflecteur (5) s'étendant dans ladite chambre (C) et qui définit une première partie de chambre (7) en communication avec ladite entrée (3) et avec ledit conduit (2) et une deuxième partie de chambre (8) en communication avec ladite pluralité de sorties (4),
- où ledit corps a une conformation allongée définissant une direction longitudinale du collecteur et ledit déflecteur (5) s'étend dans ledit corps de collecteur parallèlement à ladite direction longitudinale dudit corps, d'une paroi d'extrémité (10) du corps où l'entrée (3) pour l'air d'admission est formée, jusqu'à une extrémité libre (50) du déflecteur (5) située à une certaine distance d'une deuxième paroi d'extrémité (11) dudit corps qui est opposée à la première paroi d'extrémité (10),
où ledit conduit (2) des gaz d'échappement recirculés a une partie d'extrémité terminale (20) qui est interne à ladite première partie de chambre (7) et qui est dirigée transversalement à la direction du flux d'air d'admission dans ladite première partie de chambre (7),
ladite unité de collecteur d'admission (1) étant **caractérisée en ce que** ladite partie terminale (20) du conduit (2) des gaz recirculés a une paroi d'extrémité fermée (21) et une paroi latérale (22) avec au moins une ouverture (23) d'un côté opposé par rapport à l'entrée d'air (3), pour diriger le flux des gaz d'échappement recirculés dans ladite première partie de chambre (7) dans la même direction du flux d'air d'admission dans ladite première partie de chambre (7),
**en ce que** ledit corps du collecteur d'admission est constitué de matière plastique et est formé par deux demi-coques (12, 13) soudées l'une à l'autre,
**en ce que** ledit déflecteur (5) est une paroi sensiblement plane formée par deux des demi-parois (51, 52) appartenant respectivement auxdites demi-coques (12, 13) et ayant une ligne de liaison mutuelle (L) le long d'un axe longitudinal médian du déflecteur (5),
**en ce que** ladite unité de collecteur (1) comprend en outre un capteur de température et/ou un capteur de pression (6) situé(s) dans ladite première partie de chambre (7) de ladite chambre (C), en amont de ladite partie terminale (20) du conduit (2) des gaz d'échappement recirculés, par rapport à la direction du flux d'air d'admission.

2. Unité de collecteur d'admission (1) selon la revendication 1, **caractérisée en ce que** ladite paroi sensiblement plane du déflecteur (5) a une pluralité de trous.

3. Unité de collecteur d'admission (1) selon la revendication 1, **caractérisé en ce que** ladite partie terminale (20) du conduit (2) pour les gaz d'échappement recirculés est insérée à travers un trou (H) d'une paroi latérale (15) du corps de collecteur et est rigidement reliée à une bride (14) vissée à ladite paroi latérale (15) du corps de collecteur.
